# EUROPÄISCHE PATENTANMELDUNG

(11) **EP 2 783 775 A2**
(43) Veröffentlichungstag der Anmeldung: **01.10.2014**
(21) Anmeldenummer: 14160617.8
(22) Anmeldetag: 19.03.2014
(51) Int. Cl.: B22F 3/105

(54) **Verwendung eines additiven Herstellungsverfahrens zur Herstellung eines Bauteils für ein Kraftfahrzeug**

(30) Priorität: 25.03.2013 DE 102013205244
(71) Anmelder: MAHLE International GmbH, 70376 Stuttgart (DE)
(72) Erfinder: Bauer, Swen-Juri, 70374 Stuttgart (DE); Grüner, Andreas, 73110 Hattenhofen (DE); Martinez, Samuel, 73614 Schorndorf (DE); Kerler, Boris, Dr., 70192 Stuttgart (DE); Müller, Ulf, 70173 Stuttgart (DE); Velte, Volker, 75443 Ötisheim (DE)
(74) Vertreter: BRP Renaud & Partner

(57) **Zusammenfassung**

Die Erfindung betrifft die Verwendung eines additiven Herstellungsverfahrens zum Herstellen wenigstens eines Bauteils für ein Kraftfahrzeug. Mittels eines derartigen Herstellungsverfahrens lassen sich verschiedene Bauteile für ein Kraftfahrzeug auf einfache und somit kostengünstige Weise herstellen.

## Beschreibung

Die vorliegende Erfindung betrifft die Verwendung eines additiven Herstellungsverfahrens sowie ein Bauteil für ein Kraftfahrzeug, welches wenigstens bereichsweise durch die Verwendung dieses additiven Verfahrens hergestellt wurde.

In den verschiedenen in einem Kraftfahrzeug eingesetzten Komponenten kommen häufig eine Vielzahl von "kleineren" Bauteilen zum Einsatz, deren Herstellung, wenn sie nur in Kleinserie hergestellt werden oder wenn ein Prototyp des Bauteils entwickelt werden soll, spezifische Werkzeuge erfordert, was wiederum zu hohen Kosten und langen Lieferzeiten bei der Herstellung solcher Bauteile führen kann.

Dies gilt beispielsweise bei der Herstellung von Wärmeübertragerrohren im Kraftfahrzeug, welche Teil eines Wärmeübertragers sein können, mittels welchem wiederum ein Ölfiltermodul einer Brennkraftmaschine des Kraftfahrzeugs gekühlt werden soll. Insbesondere die Herstellung von kleinen Wärmeübertragerrohren bzw. Wärmewellrippen, die Teil des Wärmeübertragers sind, kann mit hohen Kosten und langen Lieferzeiten verbunden sein, da sie technisch relativ aufwändig ist, insbesondere was die bereits erwähnte Herstellung von Prototypen und Kleinserien betrifft.

Entsprechendes gilt für das einen solchen Wärmeübertrager verwendende Ölfiltermodul selbst, welches eine Vielzahl von Flanschanbindungen sowie Kanäle zum Durchströmen mit einem Öl aufweisen kann. Zudem besteht eine Ölfiltereinrichtung mit einem Wärmeübertrager zum Beheizen der Ölfiltereinrichtung üblicherweise aus einer besonders großen Anzahl von Bauteilen. So sind beispielsweise bereits Wärmeübertrager und das eigentliche Ölfiltermodul in herkömmli-cher Weise jeweils mit separaten Gehäusen gefertigt, wobei das Wärmeübertragergehäuse folglich in einem separaten Herstellungsschritt am Gehäuse der Ölfiltereinrichtung befestigt werden muss. Hierzu sind wiederum eine Vielzahl von Kleinteilen, beispielsweise Schrauben, Dichtungen usw. erforderlich, was den Aufwand bei der Herstellung eines derartigen Bauteils signifikant erhöht und somit auch die Herstellungskosten des Bauteils in die Höhe treibt.

Es ist daher eine Aufgabe der vorliegenden Erfindung, eine verbesserte Ausführungsform für ein Herstellungsverfahren für ein Bauteil eines Kraftfahrzeugs anzugeben.

Die oben genannte Aufgabe wird gelöst durch den Gegenstand der unabhängigen Patentansprüche. Bevorzugte Ausführungsformen sind Gegenstand der abhängigen Patentansprüche.

Die vorliegende Erfindung beruht auf dem allgemeinen Gedanken, zum Herstellen wenigstens eines Bauteils für ein Kraftfahrzeug ein additives Herstellungsverfahren zu verwenden. Unter dem Begriff "additives Herstellungsverfahren" sind dabei alle Herstellungsverfahren subsummiert, welche das Bauteil unmittelbar aus einem Computermodell heraus schichtweise aufbauen.

Derartige Herstellungsverfahren sind auch unter dem Begriff "Rapid Forming" bekannt. Unter dem Begriff "Rapid Forming" sind dabei insbesondere Produktionsverfahren zur schnellen und flexiblen Herstellung des Bauteils mittels werkzeugloser Fertigung direkt aus CAD-Daten zusammengefasst. Die Verwendung eines additiven Herstellungsverfahrens ermöglicht die Herstellung des Bauteils für das Kraftfahrzeug ohne bauteilspezifische Investitionsmittel, wie z.B. Werkzeugformen o.ä. und nahezu ohne geometrische Einschränkungen.

Die Verwendung eines additiven Herstellungsverfahrens ermöglicht gleichzeitig die maximale Flexibilität hinsichtlich der Individualisierbarkeit des herzustellenden Bauteils. Mittels des additiven Herstellungsverfahrens ist es möglich, die Gestaltung des Bauteils funktionsgebunden und nicht mehr werkzeuggebunden zu konstruieren. Damit können Bauteile sowie deren Schnittstellen zu anderen Bauteilen sowie Abdichtungen durch den Entfall von Kleinteilen starkvereinfacht werden.

In einer bevorzugten Ausführungsform kann das additive Herstellungsverfahren Lasersintern umfassen. Dies bedeutet, dass zum Herstellen des wenigstens einen Bauteils für ein Kraftfahrzeug ein Lasersinterverfahren verwendet wird. Ein solches Lasersinterverfahren ist dabei auch unter dem Begriff "Laserschmelzen" bekannt. Mittels eines solchen Verfahrens können Bauteile aus metallischen Pulvern in nahezu beliebigen und sehr komplexen Formen direkt aus 3D-CAD-Daten hergestellt werden. Bei Verwendung eines Lasersinterverfahrens erhält das derart hergestellte Bauteil seine Endeigenschaften direkt während des Herstellungsprozesses. Grundsätzlich wird das zu fertigende Bauteil beim Lasersintern werkzeuglos und schichtweise auf Basis des dem Bauteil zugeordneten dreidimensionalen CAD-Modells gefertigt.

Vorzugsweise wird das Laserschmelzen bzw. Lasersintern ohne einen Sinterprozess durchgeführt, d.h., während der Herstellung des Bauteils wird der für das herzustellende Bauteil verwendete Werkstoff unter Lasereinwirkung im Wesentlichen zu 100%, also vollständig, aufgeschmolzen und erstarrt unmittelbar. Ohne einen nachträglichen Sinterprozess können auf diese Weise Bauteile mit annähernd 100% Dichte hergestellt werden. Gemäß der vorgeschlagenen bevorzugten Ausführungsform wird also das beispielsweise in der Medizintechnik bekannte Lasersintern für die Herstellung eines Bauteils für ein Kraftfahrzeug verwendet. Durch die Verwendung des Lasersinterns können insbesondere Bauteile für ein Kraftfahrzeug in Kleinserienfertigung hergestellt werden.

Als Werkstoff für das mittels Lasersintern herzustellende Bauteil können vorzugsweise Leichtmetalle wie Aluminium, Titan, Stahl oder Buntmetalle, aber auch Hartmetalle und hochschmelzende Legierungen verwendet werden.

Das verwendete Herstellungsverfahren kann verschiedene Verfahrensschritte umfassen, welche sowohl die Erzeugung der 3D-CAD-Datenmodelle als auch die generative Fertigung bis hin zur physikalischen geometrischen Endkontrolle des Bauteils umfassen können.

In einer vorteilhaften Weiterbildung kann das additive Herstellungsverfahren die folgenden Schritte umfassen:
a) Herstellen des Bauteils mittels Lasersintern,
b) Reinigen des Bauteils,
c) Nachbearbeiten des Bauteils.

Besonders bevorzugt kann das herzustellende bzw. hergestellte Bauteil eine Filtereinrichtung, eine Kühlereinrichtung, einen Wärmeübertrager, eine Pendelschieberpumpe, einen Kolben, oder ein Adapterbauteil, jeweils für ein Kraftfahrzeug, umfassen. Die Erfindung schlägt somit die Verwendung des additiven Herstellungsverfahrens zu Herstellung einer Vielzahl von verschiedenen, im Kraftfahrzeugbau verwendeten und insbesondere eine komplexe Geometrie aufweisende Bauteile vor. Auch die eingangs im Zusammenhang mit einer Filtereinrichtung bzw. einem Wärmeübertrager genannten Bauteile wie beispielsweise Wärmeübertragerrohre bzw. Wärmewellrippen usw. können unter Verwendung des additiven Herstellungsverfahrens erfindungsgemäß auf einfache und kostengünstige, aber dennoch sehr flexible Art und Weise hergestellt werden.

Des Weiteren kann das herzustellende bzw. hergestellte Bauteil auch ein Teil eines Abgasturboladers, insbesondere ein Verdichter- oder Turbinenrad eines Abgasturboladers für ein Kraftfahrzeug sein. Somit kann das additive Herstellungsverfahren bzw. dessen Verwendung auch zur kostengünstigen und dennoch hocheffizienten Herstellung von Turbomaschinen für Brennkraftmaschinen eines Kraftfahrzeugs verwendet werden.

Selbstverständlich sind die unter Verwendung des additiven Herstellungsverfahrens herstellbaren Bauteile nicht auf die oben genannten Bauteile beschränkt. Grundsätzlich betrifft die Erfindung ganz allgemein ein Bauteil für ein Kraftfahrzeug, welches wenigstens bereichsweise durch Verwendung eines additiven Verfahrens wie vorangehend erläutert hergestellt wird.

In einer vorteilhaften Weiterbildung eines solches Bauteils kann in diesem wenigstens ein Fluidkanal zum Durchströmen mit einem Fluid ausgebildet sein, welcher mittels eines additiven Herstellungsverfahrens hergestellt ist. Alternativ oder zusätzlich kann gemäß dieser bevorzugten Ausführungsform das Bauteil wenigstens einen Gehäuseabschnitt umfassen, welcher mittels des additiven Herstellungsverfahrens hergestellt ist.

Vorzugsweise kann das Bauteil eine Ölfiltereinrichtung für ein Kraftfahrzeug sein, wobei die Ölfiltereinrichtung ein Filtergehäuse sowie eine im Filtergehäuse angeordnete Filtereinheit zum Filtern von in das Filtergehäuse eingebrachtem Öl aufweist. Des Weiteren kann das Bauteil einen Wärmeübertrager zum Erwärmen des in das Filtergehäuse eingebrachten Fluids aufweisen, wobei der Wärmeübertrager ein integral am Filtergehäuse ausgeformtes und mittels des additiven Fertigungsverfahrens hergestelltes Wärmeübertragergehäuse aufweist.

In einer vorteilhaften Weiterbildung kann das Wärmeübertragergehäuse wenigstens eine Durchgangsöffnung aufweisen, welche ein Innenvolumen des Wärmeübertragergehäuses fluidisch mit einem Innenvolumen des Filtergehäuses verbindet. Dies bedeutet, dass sich die Verwendung des additiven Herstellungsverfahrens erfindungsgemäß bevorzugt dann anbietet, wenn verschiedene Bauteile fluidisch miteinander verbunden werden sollen und hierzu bestimmte Fluidleitungen in einem oder mehreren Bauteilen ausgebildet werden sollen und mittels geeigneter Öffnungen bzw. Flanschabschnitte miteinander verbunden werden sollen.

Bei einer weiteren bevorzugten Ausführungsform des Wärmeübertragers werden darin die Einzelteile, insbesondere die Strukturteile wie Wellrippen oder Turbolenzeinlagen durch Lasersintern herzustellen.

In einer vorteilhaften Weiterbildung kann der gesamte Wärmeübertrager einschließlich seiner Strukturteile durch das additive Herstellungsverfahren als ein Bauteil erzeugt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Teilansicht einer mittels eines additiven Herstellungsverfahrens hergestellten Ölfiltereinrichtung,
- Fig. 2: eine Teilansicht einer mittels eines aus dem Stand der Technik bekannten Herstellungsverfahrens hergestellten Ölfiltereinrichtung,
- Fig. 3: ein mittels eines herkömmlichen Herstellungsverfahrens hergestelltes Gehäusebauteil mit einer Fluidleitung,
- Fig. 4: ein unter Verwendung eines additiven Herstellungsverfahrens hergestelltes Gehäusebauteil mit einer Fluidleitung,
- Fig. 5: einen Leitungsabschnitt der Fluidleitung der Figur 3 in einem Längsschnitt,
- Fig. 6: einen Leitungsabschnitt der Fluidleitung der Figur 4 in einem Längsschnitt.

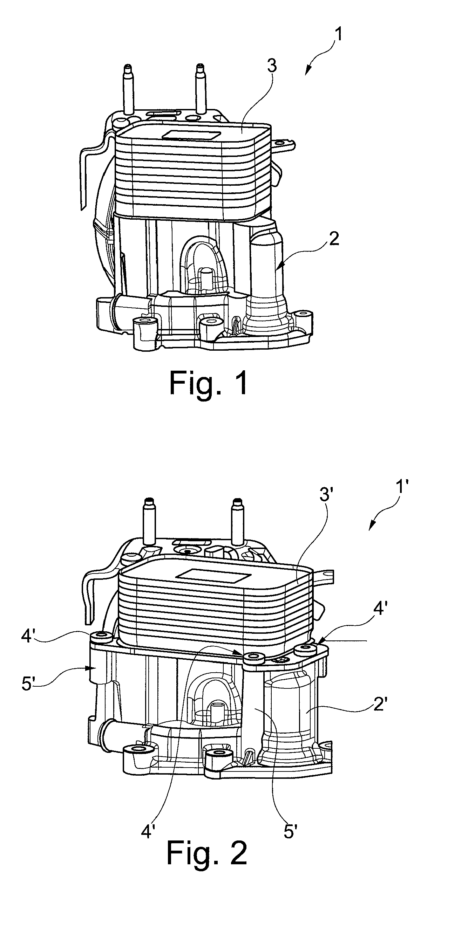

In der Figur 1 ist eine Ölfitereinrichtung 1 gezeigt, die mittels eines additiven Herstellungsverfahrens hergestellt wurde. Unter dem Begriff "additives Herstellungsverfahren" sind dabei alle Herstellungsverfahren gemeint, welche das Bauteil unmittelbar aus einem Computermodell heraus schichtweise aufbauen. Die Verwendung eines additiven Herstellungsverfahrens ermöglicht gleichzeitig die maximale Flexibilität hinsichtlich der Individualisierbarkeit des herzustellenden Bauteils.

Das additive Herstellungsverfahren kann Lasersintern umfassen. Dies bedeutet, dass auch zum Herstellen der in der Figur 1 gezeigten Ölfitereinrichtung 1 ein Lasersinterverfahren verwendet wird. Ein solches Lasersinterverfahren ist auch unter dem Begriff "Laserschmelzen" bekannt. Mittels eines solchen Verfahrens können Bauteile aus metallischen Pulvern in nahezu beliebigen und sehr komplexen Formen direkt aus 3D-CAD-Daten hergestellt werden. Bei Verwendung eines Lasersinterverfahrens erhält das derart hergestellte Bauteil seine Endeigenschaften direkt während des Herstellungsprozesses. Grundsätzlich wird das zu fertigende Bauteil 1 beim Lasersintern werkzeuglos und schichtweise auf Basis des dem Bauteil zugeordneten dreidimensionalen CAD-Modells gefertigt.

Das Lasersintern bzw. Laserschmelzen kann ohne einen Sinterprozess durchgeführt werden, d.h., während der Herstellung des Bauteils wird der für das herzustellende Bauteil verwendete Werkstoff unter Lasereinwirkung zu 100%, also vollständig, aufgeschmolzen und erstarrt unmittelbar. Ohne einen nachträglichen Sinterprozess können auf diese Weise Bauteile mit annähernd 100% Dichte hergestellt werden. Als Werkstoff für das mittels Lasersintern herzustellende Bauteil können vorzugsweise Leichtmetalle wie Aluminium oder Titan, aber auch Hartmetalle und hochschmelzende Legierungen verwendet werden.

Die mittels des additiven Herstellungsverfahrens hergestellte Ölfiltereinrichtung 1 umfasst ein Filtergehäuse 2 sowie eine im Filtergehäuse angeordnete Filtereinheit zum Filtern von in das Filtergehäuse 2 eingebrachtem Öl. Des Weiteren kann die Ölfiltereinrichtung 1 einen Wärmeübertrager zum Erwärmen des in das Filtergehäuse eingebrachten Fluids aufweisen, wobei der Wärmeübertrager ein integral am Filtergehäuse 2 ausgeformtes und mittels des additiven Fertigungsverfahrens hergestelltes Wärmeübertragergehäuse 3 aufweist.

In der Figur 2 ist demgegenüber eine entsprechende, nach einem herkömmlichen Verfahren hergestellte Ölfiltereinrichtung 1' dargestellt, die ebenfalls einen Wärmeübertrager mit einem Wärmeübertragergehäuse 3' aufweist. Im Gegensatz zur Ölfiltereinrichtung 1 aus Fig. 1 ist das Wärmeübertragergehäuse 3' als zum Filtergehäuse 2' separates Bauteil ausgebildet und mittels Gewindeschrauben 4', welche in am Filtergehäuse 2' vorgesehene Gewindebohrungen 5' eingeschraubt sind, am Filtergehäuse 2' befestigt.

Derartige Befestigungsmittel sind bei der Herstellung der Ölfiltereinrichtung 1 mittels des additiven Fertigungsverfahrens nicht erforderlich, da das Wärmeübertragergehäuse 3 integral am Filtergehäuse 2 angeformt werden kann, d.h. der Aufbau der Ölfiltereinrichtung 1 ist gegenüber der Ölfiltereinrichtung 1' vereinfacht, was sich günstig auf die Herstellungskosten auswirkt.

Selbstverständlich kann das additive Herstellungsverfahren auch zum Herstellen weiterer Bauteile der Ölfiltereinrichtung 1 verwendet werden. Dabei erfordert das additive Herstellungsverfahren keine speziellen Werkzeugformen o.ä. und erlaubt, wie am Beispiel des Wärmeübertragergehäuses 3 exemplarisch erläutert, die Herstellung von verschiedenartigen Bauteilen oder sogar Bauteilgruppen nahezu ohne geometrische Einschränkungen. Auf diese Weise kann eine Über- oder Unterdimensionierung der Bauteile auf einfache Weise minimiert werden.

Das verwendete additive Herstellungsverfahren kann dabei verschiedene Verfahrensschritte umfassen, welche sowohl die Erzeugung der 3D-CAD-Datenmodelle als auch die generative Fertigung bis hin zur physikalischen geometrischen Endkontrolle des Bauteils umfassen können. Zur Herstellung der Ölfiltereinrichtung 1 kann das additive Herstellungsverfahren grundsätzlich die folgenden Schritte umfassen:
a) Herstellen des Bauteils mittels Lasersintern,
b) Reinigen des Bauteils,
c) Nachbearbeiten des Bauteils.

Es ist klar, dass das die Verwendung eines additiven Herstellungsverfahrens nicht nur auf die Herstellung einer Ölfiltereinrichtung 1 beschränkt ist. Vielmehr schlägt die Erfindung die Verwendung eines additiven Herstellungsverfahrens zu Herstellung einer Vielzahl von verschiedenen, im Kraftfahrzeugbau verwendeten Bauteile vor. So kann das hergestellte Bauteil beispielsweise eine Filtereinrichtung, eine Kühlereinrichtung, einen Wärmeübertrager, eine Pendelschieberpumpe, einen Kolben, oder ein Adapterbauteil, jeweils für ein Kraftfahrzeug sein. Grundsätzlich betrifft die Erfindung ganz allgemein ein Bauteil für ein Kraftfahrzeug, welches wenigstens bereichsweise durch Verwendung des vorangehend erläuterten additiven Verfahrens hergestellt wird.

Somit kann das herzustellende bzw. hergestellte Bauteil auch ein Teil eines Abgasturboladers, insbesondere ein Verdichter- oder Turbinenrad eines Abgasturboladers, für ein Kraftfahrzeug sein. In diesem Zusammenhang kann die Verwendung eines additiven Herstellungsverfahrens auch zur kostengünstigen und dennoch kosteneffizienten Herstellung von Turbomaschinen für Brennkraftmaschinen eines Kraftfahrzeugs beitragen.

Auch weitere in einer Ölfiltereinrichtung 2, insbesondere mehrfach, verwendete Kleinteile wie beispielsweise Wärmeübertragerrohre bzw. Wärmewellrippen usw. können unter Verwendung des additiven Herstellungsverfahrens erfindungsgemäß auf einfache und kostengünstige, aber dennoch sehr flexible Art und Weise hergestellt werden.

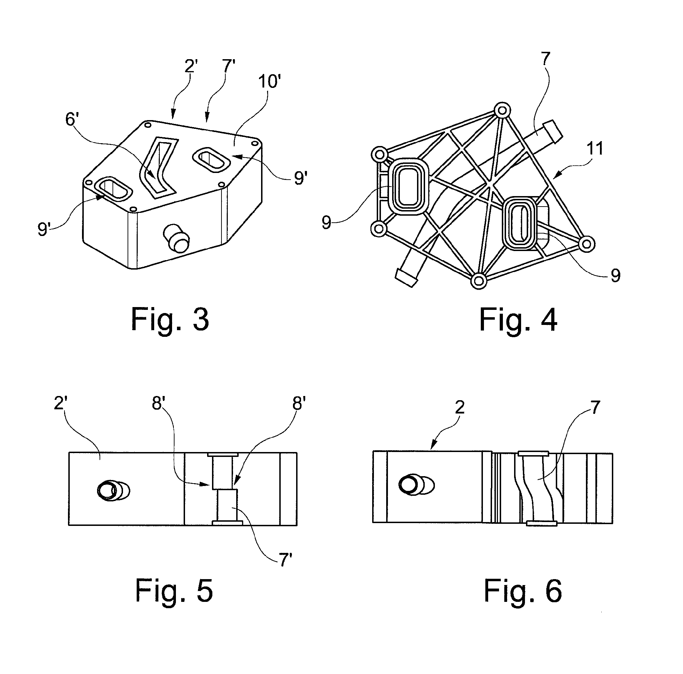

In der Figur 3 ist nun exemplarisch eine mittels eines konventionellen Herstellungsverfahrens hergestellte Fluidleitung 6' in einem Gehäuseteil 7' dargestellt. Man erkennt, dass diese in der Art eines offenen Kanals hergestellt ist, welcher durch eine dichte Verbindung des Gehäuseteil 7' mit einem weiteren Gehäuseteil (nicht gezeigt) geschlossen wird. Die Herstellung einer geschlossenen Fluidleitung 6' aus zwei Gehäuseteilen ist technisch relativ aufwändig und erfordert zusätzliche Maßnahmen zur Abdichtung nach dem Zusammenbau der beiden Gehäuseteile. Zudem weist in herkömmlicher Weise unter Verwendung von Werkzeugen hergestellte die Fluidleitung 6' werkzeugbedingte Querschnittssprünge auf. Ebenso kann nach dem Zusammenbau ein zusätzliches, relativ aufwändiges Aufstanzen der Gusshaut der Gehäuseteile 7' erforderlich sein. Die Schraubaugen 9' sind mittels Formwerkzeugen aus dem massiven Grundkörper 10' geformt. Vor allem besitzt die Fluidleitung 6' drei Entformungsrichtungen, welche einen komplizierten Werkzeugaufbau erfordern. Zudem ist das gesamte gehäuseteil 7' deutlich materialintensiver ausgestaltet.

Demgegenüber ist bei einer mittels des additiven Herstellungsverfahrens hergestellten und in der Figur 4 gezeigten Fluidleitung 7 ein Zusammenbau von Gehäuseteilen nicht erforderlich. Anstelle eines massiven Grundkörpers ist eine leichtgewichtige Rippenstruktur 11 vorgesehen, mittels welcher die Schraubaugen 9 und die Fluidleitung 7 miteinander verbunden sind. Die Schraubaugen 9, die Rippenstruktur 11 und die Fluidleitung 7 können mittels Lasersintern einstückig hergestellt werden. Ebenso erlaubt das Lasersintern eine direkte Herstellung der Fluidleitung 7 mit einem geschlossenen, insbesondere konstant runden, Leitungsquerschnitt. Zudem Entfallen zusätzliche Nachbearbeitungsschritte wie das o.g. Aufstanzen der Gusshaut. Auch ist das dargestellte gehäuseteil mit der Fluidleitung deutlich materialoptimiert.

Die Verwendung eines additiven Herstellungsverfahrens erlaubt zudem die Herstellung von Fluidleitungen 7 mit optimiertem Strömungsquerschnitt. Insbesondere können die erfindungsgemäß mittels eines additiven Verfahrens hergestellten Fluidleitungen 7 hinsichtlich ihrer Oberflächenkontur in Längsrichtung keine Kontursprünge 8' auf, wie dies für eine mittels eines herkömmlichen Verfahrens hergestellte Fluidleitung 7' der Fall sein kann, was exemplarisch in der Figur 5 gezeigt ist.

Die Figur 6 zeigt demgegenüber einen Abschnitt einer mittels eines additiven Herstellungsverfahrens hergestellten Fluidleitung 7 in einem Längsschnitt. Man erkennt, dass die Oberflächenkontur der Innenumfangsfläche der Fluidleitung 7 keinen Sprung o.ä. aufweist, was verbesserte Strömungseigenschaften der Fluidleitung zur Folge hat. Derartige Fluidleitungen 7 können beispielsweise verwendet werden, um ein Innenvolumen des Wärmeübertragergehäuses 3 fluidisch mit einem Innenvolumen des Filtergehäuses 2 zu verbinden. Dies bedeutet, dass sich die Verwendung des additiven Herstellungsverfahrens erfindungsgemäß bevorzugt dann anbietet, wenn verschiedene Bauteile fluidisch miteinander verbunden werden sollen und hierzu bestimmte Fluidleitungen 7 in einem oder mehreren Bauteilen ausgebildet und mittels geeigneter Öffnungen bzw. Flanschabschnitte miteinander verbunden werden sollen.

## Patentansprüche

1. Verwendung eines additiven Herstellungsverfahrens zum Herstellen wenigstens eines Bauteils für ein Kraftfahrzeug.

2. Verwendung nach Anspruch 1,
**dadurch gekennzeichnet, dass**
das additive Herstellungsverfahren Lasersintern umfasst.

3. Verwendung nach Anspruch 2,
**dadurch gekennzeichnet, dass**
das additive Herstellungsverfahren die folgenden Schritte umfasst:
a) Herstellung des Bauteils mittels Lasersintern,
b) Reinigen des Bauteils,
c) Nachbearbeiten des Bauteils.

4. Verwendung nach einem der Ansprüche 1 bis 3,
**dadurch gekennzeichnet, dass**
mittels des additiven Herstellungsverfahrens zumindest ein Teil, insbesondere ein gehäuseteil, einer Filtereinrichtung, einer Kühlereinrichtung, eines Wärmeübertragers, einer Pendelschieberpumpe, eines Kolbens, oder eines Adapterbauteils für ein Kraftfahrzeug hergestellt wird.

5. Verwendung nach einem der vorhergehenden Ansprüche,
**dadurch gekennzeichnet, dass**
mittels des additiven Herstellungsverfahrens zumindest ein Teil eines Abgasturboladers, insbesondere ein Verdichter- oder Turbinenrad eines Abgasturboladers, hergestellt wird.

6. Bauteil für ein Kraftfahrzeug, wenigstens bereichsweise hergestellt durch Verwendung des additiven Verfahrens nach einem der vorhergehenden Ansprüche.

7. Bauteil nach Anspruch 6,
**dadurch gekennzeichnet, dass**
- in dem Bauteil wenigstens ein Fluidkanal (7) zum Durchströmen mit einem Fluid ausgebildet ist, welcher mittels des additiven Fertigungsverfahrens hergestellt ist, und/oder,
- das Bauteil wenigstens einen Gehäuseabschnitt umfasst, welcher mittels des additiven Fertigungsverfahrens hergestellt ist.

8. Bauteil nach Anspruch 6 oder 7,
**dadurch gekennzeichnet, dass**
das Bauteil eine Ölfiltereinrichtung (1) für ein Kraftfahrzeug ist, wobei die Ölfiltereinrichtung umfasst:
- ein Filtergehäuse (2),
- eine im Filtergehäuse (2) angeordnete Filtereinheit zum Filtern von in das Filtergehäuse eingebrachtem Öl,
- einen Wärmeübertrager zum Erwärmen des in das Filtergehäuse eingebrachten Fluids,
- wobei der Wärmeübertrager ein integral am Filtergehäuse angeformtes und mittels des additiven Herstellungsverfahrens hergestelltes Wärmeübertragergehäuse (3) aufweist.

9. Bauteil nach Anspruch 8,
**dadurch gekennzeichnet, dass**
das Wärmeübertragergehäuse (3) wenigstens eine Durchgangsöffnung aufweist, welche ein Innenvolumen des Wärmeübertragergehäuses (3) fluidisch mit einem Innenvolumen des Filtergehäuses verbindet.
